# EUROPÄISCHE PATENTSCHRIFT

(11) **EP 2 223 782 B1**
(45) Veröffentlichungstag und Bekanntmachung des Hinweises auf die Patenterteilung: **20.11.2013**
(21) Anmeldenummer: 10001087.5
(22) Anmeldetag: 03.02.2010
(51) Int. Cl.: B25F 5/02, A01G 3/053, B23D 51/00, H01M 2/10

(54) **Akkupack für ein Elektrowerkzeug**
Battery pack for an electrical tool
Batterie pour un outil électrique

(30) Priorität: 27.02.2009 DE 102009012180
(43) Veröffentlichungstag der Anmeldung: 01.09.2010
(73) Patentinhaber: Andreas Stihl AG & Co. KG, 71336 Waiblingen (DE)
(72) Erfinder: Reber, Volker, 74544 Michelbach an der Bilz (DE)
(74) Vertreter: Wasmuth, Rolf

(56) Entgegenhaltungen:
- EP-A2- 0 494 505
- EP-A2- 1 780 818
- WO-A1-2007/100140
- DE-A1- 10 056 370
- DE-U1- 20 102 675
- US-A- 6 004 689
- US-A1- 2008 152 993

## Beschreibung

Die Erfindung betrifft einen Akkupack für ein Elektrowerkzeug, insbesondere für ein handgeführtes Arbeitsgerät wie eine Motorkettensäge, eine Heckenschere oder dgl. nach dem Oberbegriff des Anspruchs 1.

Akkubetriebene Elektrowerkzeuge wie Akkuschrauber oder Akkubohrer oder auch Akkugartenscheren sind bekannt. Sie werden von einem Akkupack betrieben, der am Gehäuse des Werkzeugs gehalten ist. Einerseits verlangt der Benutzer ausreichend Leistung bei angemessener Betriebszeit, andererseits darf das Elektrowerkzeug, insbesondere wenn es handgetragen ist, nicht zu schwer werden.

Akkupacks mit Nickel/Kadmiumzellen, Nickel/Metallhydridzellen oder auch Akkuzellen auf Lithiumbasis sind bekannt. Insbesondere Akkupacks auf Basis von Lithiumzellen ermöglichen eine hohe Energiedichte, wobei die möglichen hohen Spannungen vorteilhaft sind.

Aus der US 2008/0152993 Al ist ein Akkupack aus zylindrischen Zellen bekannt, die in mehreren, nebeneinander liegenden Reihen angeordnet sind. Die Zellen einer Reihe liegen dabei auf Lücke zu den Zellen einer benachbarten Reihe, wodurch eine etwa hexagonale Packungsdichte erreicht wird. Nachteilig bei dieser Konfiguration ist eine stark zerklüftete Außenkontur, die bei der Verwendung des Akkupacks in oder an Arbeitswerkzeugen störend ist.

Zum Betrieb von Kreissägen, Heckenscheren und dgl. werden Akkupacks mit einfacher Außenkontur benötigt, die einerseits eine hohe Energiedichte haben und andererseits den im Betrieb auftretenden starken Vibrationen über eine lange Betriebsdauer widerstehen können.

Der Erfindung liegt die Aufgabe zugrunde, einen Akkupack hoher Energiedichte zur Verfügung zu stellen, der mechanisch stabil und elektrisch hoch belastbar ist.

Diese Aufgabe wird nach den kennzeichnenden Merkmalen des Anspruchs 1 gelöst.

Die Zellanordnung eines im Akkupack angeordneten Zellcontainers hat einen bestimmten geometrischen Aufbau, der eine hohe elektrische Belastbarkeit gewährleistet. Eine zentrale Kernzelle liegt in angegebener Weise innerhalb einer Gruppe von Nachbarzellen, deren Zellenachsen etwa lotrecht zu einer gemeinsamen Bezugsebene liegen, die z. B. eine zu den Enden der Akkuzellen parallele Ebene sein kann. Die Schnittpunkte der Zellachsen aller Nachbarzellen mit dieser Bezugsebene liegen auf einer gemeinsamen, etwa ellipsenförmigen Kurve. Bezogen auf die Gesamtzahl der in einem Zellcontainer angeordneten Zellen entspricht die Anzahl der Nachbarzellen mehr als einem Drittel der Gesamtzahl der Zellen des Zellcontainers. Mit dem Begriff Zellcontainer ist allgemein die Zellanordnung aus der Gesamtzahl der elektrisch miteinander kontaktierten Zellen angegeben.

Bei einer derartigen geometrischen Anordnung der Zellen ergibt sich zwischen der Kernzelle und den umliegenden Nachbarzellen ein Freiraum, der einen Wärmeübergang von den Nachbarzellen auf die Kernzelle reduziert. Im Ergebnis wird daher die Kernzelle nicht wesentlich wärmer als die anderen im Zellcontainer angeordneten Akkuzellen, so dass eine gleichmäßige Wärmebelastung gegeben ist, welche die Lebensdauer und Leistungsfähigkeit des Zellcontainers bzw. des mit derartigen Zellcontainern ausgestatteten Akkupacks signifikant erhöht. Da die Leistungsfähigkeit eines Akkupacks von der schwächsten im Pack verbauten Zelle bestimmt ist und nach der Erfindung die Zellen gleichmäßig wärmebelastet sind, kann der Leistungsunterschied zwischen den Zellen gering gehalten und damit auch über eine längere Betriebsphase eine bedeutende Gesamtleistung bereitgestellt werden.

Eine vorteilhafte Anordnung wird geschaffen, wenn die Anzahl der Nachbarzellen mehr als die Hälfte der Gesamtzahl der in einem Zellcontainer angeordneten Zellen beträgt.

Die Gesamtzahl der in einem Zellcontainer verbauten Zellen beträgt vorteilhaft etwa 9 bis 19 Zellen, insbesondere 15 Zellen. Nach einer Weiterbildung der Erfindung besteht die Gruppe der Nachbarzellen einer Kernzelle eines Zellcontainers aus acht Zellen.

Es kann zweckmäßig sein, dass die Gruppe der Nachbarzellen zwischen zwei Endreihen aus Abschlusszellen liegt, wobei die Abschlusszellen in besonderer Weise eine Zellreihe aus vorzugsweise drei Zellen bilden. Dabei kann die Lage der Zellen eines Zellcontainers so vorgesehen sein, dass die Zellen bezogen auf eine Längsmittelachse des Zellcontainers symmetrisch angeordnet sind. Dies vereinfacht die Konfektionierung eines Akkupacks und dessen elektrische Verdrahtung.

In besonderer Ausgestaltung weist ein quaderförmiger Zellcontainer längs seiner Schmalseiten je drei Außenzellen sowie eine zum Zellhalter mittige Kernzelle auf. Die Kernzelle ist dabei symmetrisch von vier Zweiergruppen von Nachbarzellen umgeben, wobei je zwei Nachbarzellen an den Längsseiten des Zellcontainers liegen. Weitere zwei Nachbarzellen liegen zwischen den Außenzellen an den Schmalseiten des Zellcontainers und der Kernzelle. Durch diesen Aufbau wird ein Zellcontainer mit fünfzehn Zellen geschaffen, so dass mit lithiumbasierten Akkuzellen der Zellcontainer Spannungen bis zu ca. 65 Volt bereitstellen kann.

Um eine gute Wärmeverteilung zu gewährleisten, liegen die Mittelpunkte der Zellenenden der Nachbarzellen einer Zweiergruppe auf einer Geraden, die etwa parallel zu der Längsseite oder der Schmalseite des Zellcontainers liegt.

Vorteilhaft umfasst der Zellcontainer Zellhalter, die an den Enden der Einzelzellen angeordnet sind und die Zellen in der erfindungsgemäßen Zellanordnung mechanisch fixieren. Jedes Zellenende einer Zelle liegt in einem Aufnahmetopf des zugeordneten Zellhalters und umgreift das Zellenende mit dem Umfangsrand des Aufnahmetopfes über mehr als etwa 180°. Dadurch können auf die Zelle wirkende Querkräfte sicher abgefangen werden. Jede Zelle wird ferner so weit in den Aufnahmetopf des zugeordneten Zellhalters eingeschoben, bis sich das Zellenende am Boden des Aufnahmetopfes abstützt, so dass eine im Wesentlichen spielfreie Lagerung einer Zelle auch in Achsrichtung einer Zelle gegeben ist.

Zur elektrischen Kontaktierung der Zellenenden ist vorgesehen, dass im Boden jedes Aufnahmetopfes eine Aussparung ausgebildet ist, wobei die Bodenaussparungen benachbarter Aufnahmetöpfe einen gemeinsamen Einlageraum begrenzen, in den ein die Zellen elektrisch kontaktierender Zellverbinder eingelegt ist. Der Zellverbinder übergreift dabei den Umfangsrand eines Aufnahmetopfes, so dass der Zellhalter nach Festlegen der Zellverbinder an den Zellenenden - z. B. durch Schweißen - zwischen dem Zellverbinder und der Zelle mechanisch formschlüssig gehalten ist.

Durch diesen Aufbau wird ein Zellcontainer mit einer gewünschten Zellanordnung geschaffen, bei dem jeder Zellhalter an den Zellenenden mechanisch festgelegt ist, wodurch sich ein mechanischer Gesamtverbund ergibt, der dem Zellcontainer eine hohe mechanische Belastbarkeit verleiht.

Bevorzugt ist der Zellverbinder im Einlageraum mechanisch fixiert, vorzugsweise unverlierbar gehalten. Dadurch ist eine Lageausrichtung des Zellverbinders und der Zellenenden zueinander vor dem Verschweißen gegeben. Eine sichere Kontaktierung der Zellverbinder an den Enden der Zellen (Plus- bzw. Minuskontakt) vor und während des Schweißvorgangs ist gewährleistet.

In einfacher Weise ist im Zellverbinder eine Öffnung vorgesehen, in die ein Zentrierkopf des Zellhalters eingreift. Durch Eindrücken des Zellverbinders in den Einlageraum greift der Zentrierkopf in die Öffnung ein, wodurch ein sicherer, lagegenauer Halt des Zellverbinders im Zellhalter gewährleistet ist. Der Zellhalter bzw. der in ihm ausgebildete Einlageraum wird so als Schweißlehre für die Zellverbinder genutzt.

Bevorzugt sind an zueinander parallelen Längsseiten des Zellhalters Führungsabschnitte ausgebildet, mit denen der Zellcontainer lagegenau in ein Gehäuse eines Akkupacks einschiebbar ist.

Zur Erzielung einer vorgegebenen Lageorientierung kann der Führungsabschnitt auf der einen Längsseite des Zellhalters zum Führungsabschnitt auf der anderen Längsseite des Zellhalters versetzt liegen. Bevorzugt liegt ein Führungsabschnitt in Draufsicht auf die Stirnseiten der Akkuzellen zwischen zwei Zellen.

In Weiterbildung der Erfindung kann der Längsrand eines Führungsabschnittes als federnde Lasche ausgebildet sein, deren freies Ende etwa auf der Höhe der Längsseite des Zellhalters endet. Die Lasche kann der spielfreien Lagerung eines Zellcontainers im Aufnahmegehäuse eines Akkupacks dienen oder auch einen Aufnahmeraum verschließen, der der Aufnahme von elektrischen Leitungen dient.

Die Zellhalter können eine Aufnahmetasche z. B. für einen Sensor wie einen Temperatursensor aufweisen oder Öffnungen haben, die z. B. der Führung einer Verdrahtung dienen können.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: einen Schnitt durch das Gehäuse eines Akkupacks mit darin angeordneten Zellcontainern,
- Fig. 2: eine Ansicht von unten auf einen Zellhalter,
- Fig. 3: eine Ansicht von oben auf einen Zellhalter,
- Fig. 4: eine schematische Lageanordnung der Zellen in einem Akkupackgehäuse,
- Fig. 5: in schematischer Darstellung die Anordnung von Zellverbindern bei einer Zellanordnung nach Fig. 4,
- Fig. 6: eine Ansicht eines etwa quadratischen Zellverbinders,
- Fig. 7: eine Ansicht eines laschenartigen Zellverbinders,
- Fig. 8: eine Ansicht eines Zellverbinders zur Verbindung von zwei Zellcontainern,
- Fig. 9: eine perspektivische Ansicht auf einen weiteren Zellhalter für eine weitere Zellanordnung,
- Fig. 10: eine Draufsicht auf den Zellhalter von außen,
- Fig. 11: eine Seitenansicht des Zellhalters nach Fig. 10,
- Fig. 12: eine Draufsicht auf den Zellhalter nach Fig. 10 von innen,
- Fig. 13: eine Ansicht eines mehreckigen Zellverbinders zur Verbindung von sechs Zellenenden miteinander,
- Fig. 14: eine Ansicht eines streifenförmigen Zellverbinders für drei Zellen,
- Fig. 15: eine Ansicht eines etwa rechteckigen Zellverbinders zur Verbindung von sechs Zellenenden miteinander,
- Fig. 16: eine perspektivische Ansicht eines Zellverbinders für je drei Zellenenden zur elektrischen Verbindung von zwei Zellcontainern,
- Fig. 17: eine Seitenansicht auf den Zellverbinder nach Fig. 16,
- Fig. 18: eine weitere schematische Lageanordnung von Zellen in einem Akkupackgehäuse,
- Fig. 19: eine schematische Anordnung der Zellverbinder bei einer Zellanordnung nach Fig. 13,
- Fig. 20: eine Ansicht eines rechteckigen Zellverbinders mit zentralen Öffnungen,
- Fig. 21: eine Ansicht eines laschenförmigen Zellverbinders,
- Fig. 22: eine Ansicht eines Zellverbinders zur elektrischen Verbindung von zwei Zellcontainern,
- Fig. 23: eine schematische Darstellung einer weiteren Zellanordnung in einem Akkupackgehäuse,
- Fig. 24: eine schematische Darstellung der Zellverbinder für eine Lageanordnung nach Fig. 20,
- Fig. 25: eine Einzelansicht eines Zellverbinders für acht Zellen,
- Fig. 26: eine Einzelansicht eines Zellverbinders für vier Zellen,
- Fig. 27: eine perspektivische Ansicht eines Zellverbinders zur elektrischen Verbindung zwischen zwei Zellcontainern.

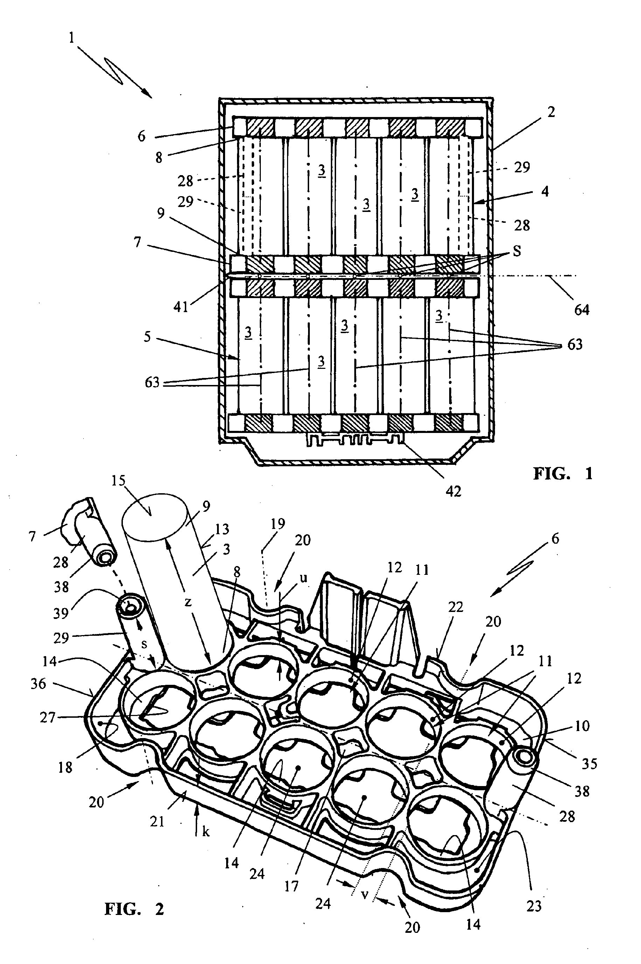

In Fig. 1 ist im Schnitt ein Akkupack 1 gezeigt, der als Energiequelle in einem handgeführten Arbeitsgerät wie eine Heckenschere, eine Motorsäge, ein Trennschleifer, ein Freischneider, ein Kantenscheider, ein Hochentaster, ein Blasgerät, ein Sprühgerät, ein Sauggerät, ein Erdbohrgerät, ein Kombimotorgerät für multifunktionelle Vorsätze, ein Kehrgerät, eine Motorhacke, eine Bodenfräse, ein Hochdruckreiniger, ein Rasenmäher, ein Vertikutierer, ein Häcksler, ein Nass- oder Trockensauger oder dgl. Arbeitsgerät dient.

Im Gehäuse 2 des Akkupacks 1 sind eine Vielzahl von Zellen 3 angeordnet. Die Zellen 3 können wieder aufladbare Zellen sein, z. B. Akkuzellen wie eine NiCd-Zelle (Nickel-Cadmium-Zelle), eine NiMh-Zelle(Nickel-Metallhydrid-Zelle), eine LiIo-Zelle (Lithium-Ionen-Zelle), eine LiPo-Zelle (Lithium-Polymer-Zelle), eine LiFePo4-Zelle (Lithium-Eisen-Phosphat-Zelle), eine Lithium-Titanat-Zelle oder dgl. aufgebaute Zellen. Vorteilhaft hat die verwendete Akkuzelle eine Zellenspannung von 2 Volt bis 5 Volt, vorzugsweise etwa 3,6 Volt bis 3,7 Volt. Mit den verwendeten Zellen können je nach der ausgeführten Schaltung (Reihenschaltung, Parallelschaltung) unterschiedliche Nennspannungen des Akkupacks bereitgestellt werden. Mit den verwendeten Zellen 3 können je nach der ausgeführten Schaltung (Reihenschaltung, Parallelschaltung) Akkupackspannungen von 12 Volt bis 150 Volt, vorzugsweise 25 Volt bis 50 Volt bereitgestellt werden.

Die verwendeten Zellen 3 werden in einem vorgegebenen geometrischen Grundaufbau einer Zellanordnung nebeneinander angeordnet, wobei die Einzelzellen 3 an ihren Zellenenden 8, 9 durch elektrische Zellverbinder in einer gewünschten Schaltung miteinander verbunden sind. Der Zellcontainer 4, 5 ist durch den geometrischen Grundaufbau der Zellanordnung zusammen mit den angeordneten elektrischen Zellverbindern ausreichend bestimmt. Sind die Zellverbinder mechanisch steif ausgeführt, wird nach deren Festlegen auf den Stirnseiten der Zellenenden 8, 9 ein mechanischer Verbund aus Einzelzellen gebildet, der nach der Beschreibung als Zellcontainer bezeichnet ist. Ein derartiger Zellcontainer hat vorzugsweise eine quaderförmige Gestalt.

Die Zellen 3 haben vorzugsweise gleiche geometrische Gestalt, z. B. eine zylindrische Grundform, wobei die Zellenachsen 63 etwa lotrecht zu einer gemeinsamen Bezugsebene 64 liegen, die z. B. durch die Stirnseiten der Enden 8 bzw. 9 der Akkuzellen 3 bestimmt sein kann. Die Zellenachsen 63 bilden mit der Bezugsebene 64 Schnittpunkte S aus. Andere geometrische Grundformen können zweckmäßig sein, wobei innerhalb eines Zellcontainers Zellen mit unterschiedlichen Grundformen und/oder geometrischen Maßen angeordnet sein können; vorzugsweise werden innerhalb eines Zellcontainers Zellen mit gleicher Grundform, insbesondere zylindrischer Grundform verwendet. Die Zellen 3 eines Zellcontainers 4, 5 haben insbesondere gleiche geometrische Abmessungen, sind also identisch.

Vorzugsweise sind die Zellen 3 eines Zellcontainers 4, 5 zwischen einem oberen Zellhalter 6 und einem unteren Zellhalter 7 gehalten und bilden zusammen mit den Zellhaltern 6, 7 eine versteifte, mechanisch stabile Baueinheit eines Zellcontainers 4 bzw. 5. Im Ausführungsbeispiel ist der Akkupack 1 aus zwei Zellcontainern 4 und 5 zusammengesetzt, wobei die Kapazität des Akkupacks 1 bevorzugt im Bereich von 2 bis 10 Ah liegt. Es können auch mehr als zwei Zellcontainer 4, 5 in einem Akkupack vorgesehen sein.

Der Zellhalter 6 an dem einen Zellenende 8 und der Zellhalter 7 an dem gegenüberliegenden Zellenende 9 einer Zelle 3 sind gleich ausgebildet. Im Folgenden wird auf den Zellhalter 6 Bezug genommen.

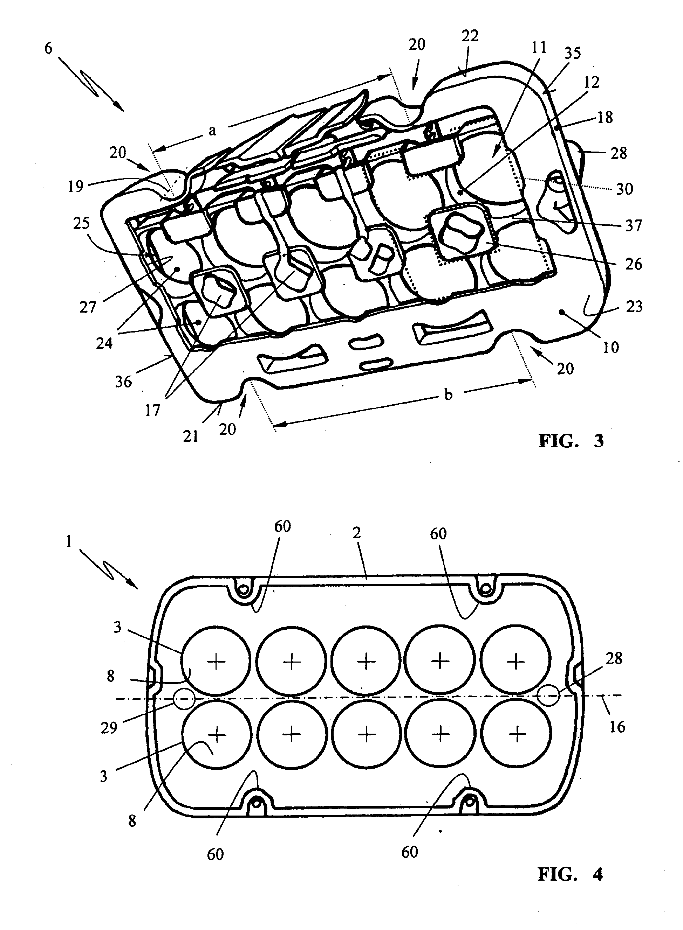

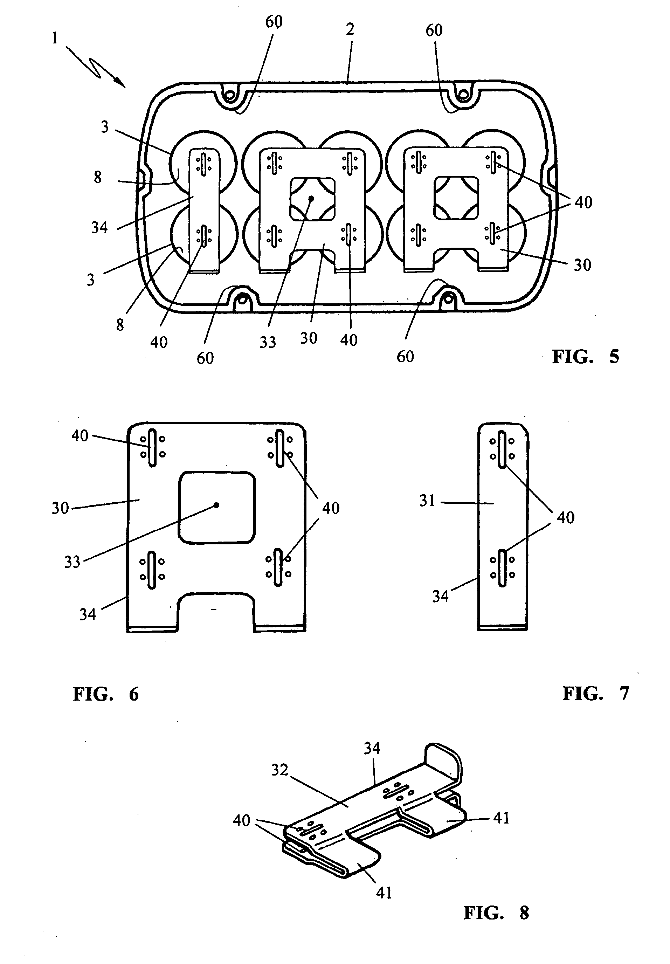

In den Figuren 2 und 3 ist ein Zellhalter 6 in einer einfachen Ausführung dargestellt, der für eine Zellanordnung aus zehn Zellen 3 nach den Figuren 4 und 5 zu verwenden ist und vollständig bestückt wird. Eine Teilbestückung der Zellhalter kann vorteilhaft sein.

Jeder Zellhalter 6 besteht aus einem Boden 10, an dem Aufnahmetöpfe 11 angeordnet sind. Die Aufnahmetöpfe 11 liegen in Fig. 2 entsprechend der gewünschten Zellanordnung im Akkupack, so wie sie in Fig. 4 schematisch dargestellt ist. Jeder Aufnahmetopf 11 weist einen Umfangsrand 12 der Höhe u auf, der den Zellumfang 13 am Ende 8 bzw. 9 umgreift. Der Umfangsrand 12 übergreift das Zellenende 8, 9 bevorzugt über mehr als etwa 180°, im Ausführungsbeispiel nach den Figuren 2 und 3 über 360°.

Das in den Aufnahmetopf 11 eingesetzte Zellenende 8 stützt sich am Topfboden 14 ab; die Zelle 3 wird somit bis zur Anlage der Stirnseite 15 ihres Zellenendes 8 bzw. 9 in den Aufnahmetopf 11 eingeschoben.

Im Ausführungsbeispiel nach Fig. 2 sind zwei Reihen von je fünf Aufnahmetöpfen 11 symmetrisch zur Längsmittelachse 16 des Zellhalters 6 bzw. des Zellcontainers vorgesehen. Im Bereich der Längsmittelachse 16 sind zwischen benachbarten Aufnahmetöpfen 11 im Boden 10 des Zellhalters durchgehende Öffnungen 17 angeordnet. Diese Öffnungen 17 können dem Hindurchführen von elektrischen Leitungen oder dgl. dienen.

Der Zellhalter 6 weist ferner einen Umfangskragen 18 (Fig. 2) auf, dessen Höhe k vorteilhaft etwa der Höhe u des Umfangsrandes 12 eines Aufnahmetopfes 11 entspricht. Der Umfangskragen 18, die Aufnahmetöpfe 11 und der Zellhalter 6, 7 sind einteilig aus einem nicht leitenden Material, insbesondere aus Kunststoff gebildet.

Im weitgehend geschlossenen Umfangskragen 18 ist jeweils auf zueinander parallelen Längsseiten 21, 22 zumindest ein Führungsabschnitt 20 ausgebildet. Der Führungsabschnitt 20 liegt innerhalb der etwa rechteckigen Kontur des Zellhalters 6 und ist teilzylindrisch, insbesondere halbzylindrisch ausgebildet. Die Zylinderlängsachse 19 des Teilzylinders liegt dabei etwa lotrecht zur Ebene 23 des Zellhalters 6 selbst.

Wie Fig. 2 zeigt, liegt der Führungsabschnitt 20 auf der einen Längsseite 21 des Zellhalters 6 zu dem Führungsabschnitt 20 auf der anderen Längsseite 22 des Zellhalters 6 um einen Betrag v versetzt.

Es kann zweckmäßig sein, auf jeder Längsseite 21, 22 je zwei Führungsabschnitte 20 vorzusehen, wobei die Führungsabschnitte 20 auf der Längsseite 21 einen Abstand b zueinander haben und die Führungsabschnitte 20 auf der Längsseite 22 einen Abstand a zueinander aufweisen. Vorzugsweise ist der Abstand a kleiner als der Abstand b, wobei die Anordnung so getroffen ist, dass die Führungsabschnitte 20 der Längsseite 22 in Seitenansicht gesehen zwischen den Führungsabschnitten 20 der Längsseite 21 liegen. Der Abstand a liegt innerhalb des Abstandes b.

Wie in den Figuren 2 und 3 dargestellt, sind im Boden 14 der Aufnahmetöpfe 11 Aussparungen 24 ausgebildet, wobei - wie Fig. 3 zeigt - nebeneinander liegende Aussparungen 24 mehrerer Aufnahmetöpfe 11 einen gemeinsamen Einlageraum 25 für Zellverbinder 30 bilden, über die die Enden 8 bzw. 9 der Zellen 3 elektrisch leitend miteinander verbunden sind. Derartige Zellverbinder 30, 31, 32 für einen Zellcontainer 4, 5 nach den Figuren 2 und 3 sind in den Figuren 5 bis 8 dargestellt.

Der in Fig. 3 strichliert dargestellte Zellverbinder 30 hat etwa quadratische Gestalt und eine mittlere Öffnung 33, in die ein Zentrierkopf 26 des Zellhalters 6 (Fig. 3) eingreift. Bevorzugt rastet der Zentrierkopf 26 in der Öffnung 33 des Zellverbinders 30 ein, wodurch der Zellverbinder 30 im Einlageraum 25 lagegenau positioniert, insbesondere mechanisch fest gehalten ist. Bevorzugt ist ein in den Zellhalter 6 eingesetzter Zellverbinder 30 bzw. 31 im Zellhalter 6 mechanisch unverlierbar gehalten. Zweckmäßig sind dabei die Ränder der Aussparungen 14 mit einem Hinterschnitt 27 ausgeführt, der den Rand 34 eines Zellverbinders übergreift und diesen so im Einlageraum 25 hält.

Innerhalb des Umfangskragens 18 des Zellhalters 6 sind zwei Stützdome 28, 29 vorgesehen, die lotrecht auf dem Boden 10 des Zellhalters 6 stehen. Im Ausführungsbeispiel nach den Figuren 2 und 3 liegen die Stützdome 28, 29 im Bereich zwischen den Zellen 3 auf den Schmalseiten 35, 36 des Zellhalters 6. Die Höhe s eines Stützdoms 28, 29 entspricht etwa der halten Höhe z einer Zelle 3.

Die Stützdome 28, 29 sind an ihren freien Enden unterschiedlich ausgebildet. Der Stützdom 29 weist eine zylindrische Aufnahme 39 für das Ende 38 des Stützdoms 28 des gegenüberliegenden Zellhalters 7 auf (Fig. 2).

Wie in Fig. 3 dargestellt, übergreift der Zellverbinder 30 den Steg 37 zwischen zwei Aufnahmetöpfen 11, der durch die Umfangsränder 12 der nebeneinander liegenden Aufnahmetöpfe 11 gebildet ist.

Sind in einem Zellhalter 6 bzw. 7 entsprechend der schematischen Zellanordnung in Fig. 4 zehn Zellen angeordnet, wird jede Zelle 3 an ihren gegenüberliegenden Enden 8 und 9 in je einem Aufnahmetopf 11 gehalten. Die Stützdome 28 und 29 der einander gegenüberliegenden Zellhalter 6 und 7 greifen ineinander ein, so dass die gegenüberliegenden Zellhalter 6 und 7 eines Zellcontainers 4 bzw. 5 gegeneinander abgestützt sind. Bevorzugt sind die Stützdome 28 und 29 der gegenüberliegenden Zellhalter 6 und 7 mechanisch miteinander verbunden, insbesondere miteinander verschraubt, wie in Fig. 1 angedeutet.

Die zehn Zellen 3 sind durch die miteinander verbundenen Zellhalter 6 und 7 zu einem Modul - nämlich dem Zellcontainer - zusammengefasst, wobei jeder Zellhalter die Zellenenden 8 bzw. 9 derart zueinander ausrichtet, dass sie über den in den Einlageraum 25 eingelegten Verbinder 30 elektrisch miteinander verbunden werden können. Die Verbinder 30 haben Schweißpunkte 40, die auf den Enden 8 bzw. 9 einer Zelle 3 festgeschweißt werden. Damit ist nicht nur eine hochstromfeste elektrische Verbindung geschaffen, sondern darüber hinaus der mechanische Verbund eines Zellcontainers 4, 5 weiter gestärkt. Da jeder Verbinder 30 den zwischen zwei Aufnahmetöpfen 11 befindlichen Steg 37 aus Teilabschnitten der Umfangsränder 12 überbrückt, ist nach dem Anschweißen der Verbinder 30 auf den Enden 8, 9 der Zellen 3 ein formschlüssiger Verbund aus Zellen, Zellhalter und Verbinder geschaffen. Der Zellcontainer 4, 5 bildet eine mechanisch feste Zellanordnung, die auch Vibrationen - wie sie in handgeführten, tragbaren Arbeitsgeräten, beispielsweise Motorkettensägen, Heckenscheren, Trennschleifern usw. auftreten können - widersteht.

Der in Fig. 8 gezeigte Zellverbinder 32 kann die elektrische Verbindung zwischen zwei Zellcontainern 4 und 5 eines Akkupacks 1 bilden, wenn er - wie in Fig. 1 angedeutet - in gegenüberliegenden Zellhaltern 6, 7 eingesetzt wird. Der Biegebereich 41 überbrückt den Abstand zwischen den übereinander angeordneten Zellcontainern 4 und 5 innerhalb des Akkupackgehäuses 2.

Der Zellhalter 6, 7 ist ferner derart ausgestaltet, dass auf seiner äußeren Flachseite eine Kontaktleiste 42 (Fig. 1) mechanisch festlegbar ist, über die der Akkupack 1 mit einem Verbraucher elektrisch kontaktiert wird. Jeder Zellcontainer 4, 5 wird über die Führungsabschnitte 20 geführt in das Gehäuse 2 des Akkupacks 1 abgesenkt. Dabei sind auf der Innenseite des Gehäuses 2 über dessen Höhe verlaufende Leitrippen 60 vorgesehen, die in die Führungsabschnitte 20 in den Längsseiten 21, 22 der Zellhalter 6, 7 eingreifen.

Wie in Fig. 1 dargestellt, besteht die Zellanordnung eines Zellcontainers 4, 5 aus einer Vielzahl einzelner Zellen 3, die aufrecht nebeneinander angeordnet sind, wobei ihre Zellenachsen 63 etwa lotrecht zu einer gemeinsamen Bezugsebene 64 liegen, die im Ausführungsbeispiel durch die auf einer Seite liegenden Stirnseiten der Enden 8 bzw. 9 der Akkuzellen 3 gebildet ist oder zu dieser parallel liegt. Die Schnittpunkte S der Zellenachsen 63 mit der Bezugsebene 64 bilden in Draufsicht auf die Bezugsebene 64 eine geometrische Figur, z. B. eine geschlossene Kurve aus.

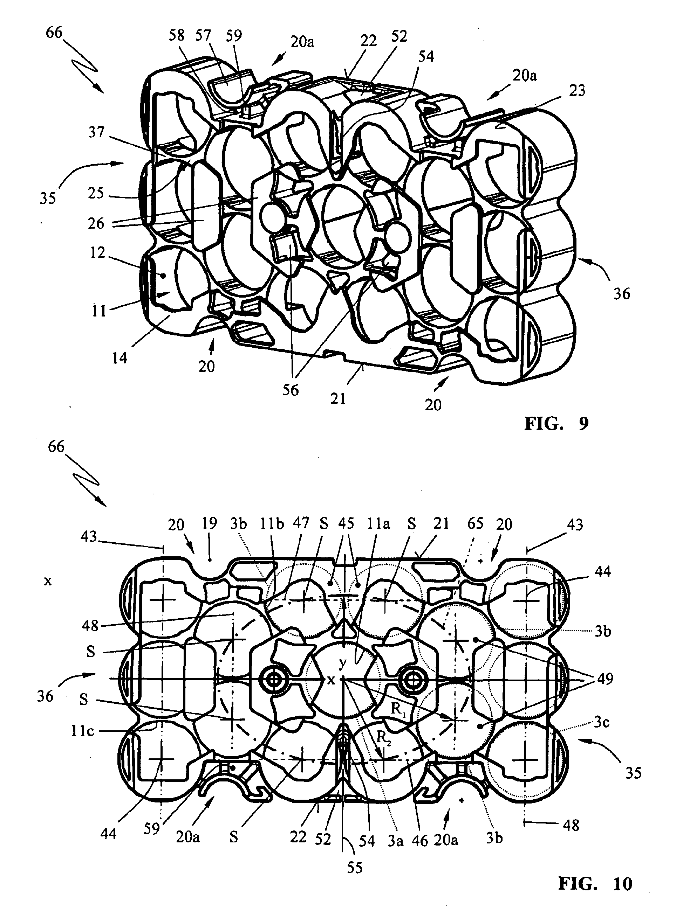

Ein derartiges bevorzugtes Ausführungsbeispiel eines Zellhalters 66 ist in den Figuren 9 bis 12 dargestellt. Der Grundaufbau des dargestellten Zellhalters 66 entspricht dem vorstehend beschriebenen Ausführungsbeispiel, weshalb für gleiche Teile gleiche Bezugszeichen verwendet sind.

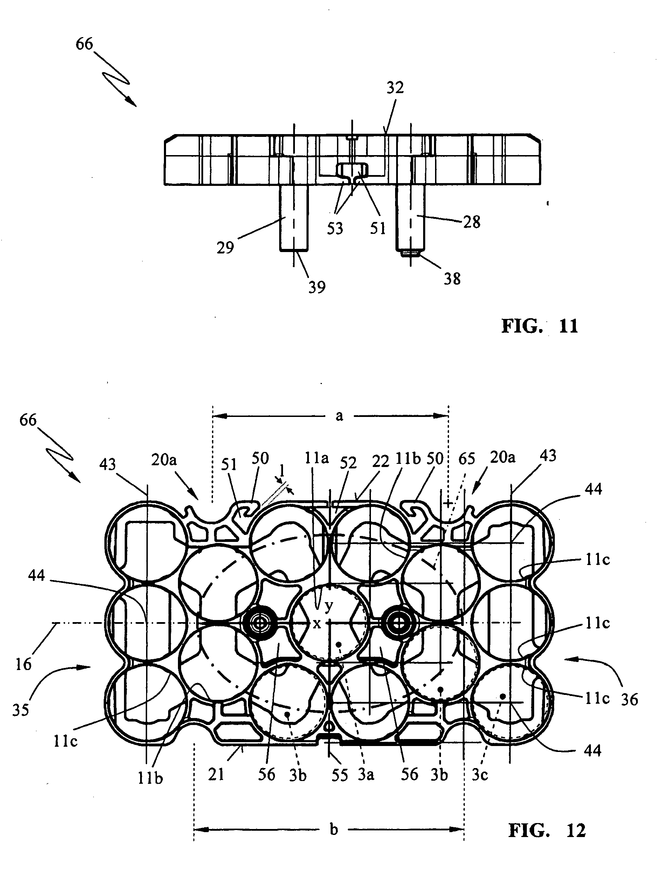

Wie sich aus den Figuren 10 und 12 ergibt, ist der Zellhalter 66 derart ausgebildet, dass bei voller Bestückung insgesamt fünfzehn Zellen 3 gehalten werden können. Längs seiner Schmalseiten 35, 36 hat ein Zellhalter 66 je drei Aufnahmetöpfe 11 für drei Zellen 3c. Die Mittelpunkte 44 der Aufnahmetöpfe 11 liegen dabei auf einer gemeinsamen Geraden 43, die parallel zur Schmalseite 35 bzw. 36 des Zellhalters bzw. des Zellcontainers liegt.

Im Zentrum des Zellhalters 66 ist ein mittiger Aufnahmetopf 11a für eine Kernzelle 3a vorgesehen. Dieser mittige Aufnahmetopf 11a wird von vier Zweiergruppen 45, 49 von Aufnahmetöpfen 11b umgeben. Je eine Zweiergruppe 45 liegt an zueinander vorzugsweise parallelen Längsseiten 21, 22 des Zellhalters 66 bzw. des Zellcontainers, wobei die Mittelpunkte 44 dieser Aufnahmetöpfe 11b auf einer Geraden 46, 47 liegen, die parallel zu den Längsseiten 21 bzw. 22 verlaufen.

Je eine weitere Zweiergruppe 49 von Aufnahmetöpfen 11b liegt zwischen dem zentralen Aufnahmetopf 11a und den Außentöpfen 11c, die an den zueinander vorzugsweise parallelen Schmalseiten 35 und 36 des Zellhalters 66 bzw. des Zellcontainers liegen. Die Mittelpunkte 44 der Aufnahmetöpfe 11b der Zweiergruppe 49 liegen auf einer Geraden 48, die parallel zur Längsseite 35 bzw. 36 liegt.

Die Zellanordnung ist so getroffen, dass im zentralen Aufnahmetopf 11a des Zellcontainers 66 eine Kernzelle 3a gehalten ist, die innerhalb einer Gruppe von Nachbarzellen 3b liegt, die in den Aufnahmetöpfen 11b gehalten sind. Wie die Fig. 10 und 12 zeigen, liegen vorzugsweise alle Schnittpunkte S der Zellenachsen 63 der Nachbarzellen 3b mit der Bezugsebene 64 (Fig. 1) auf einer gemeinsamen, geschlossenen Kurve 65. Die Kurve 65 ist insbesondere eine elliptische Kurve 65 mit einer kleinen Halbachse y und einer großen Halbachse x. Die große Halbachse x verläuft etwa parallel zu den Längsseiten 21 und 22 des rechteckförmigen Zellhalters 66 , während die kleine Halbachse y etwa parallel zu den Schmalseiten 35 und 36 des rechteckförmigen Zellhalters 66 ausgerichtet ist. Die Nachbarzellen 3b liegen mit unterschiedlichen Abständen R₁, R₂ zur zentralen Kernzelle 3a.

Der Zellhalter kann vollständig oder auch nur teilweise mit Zellen bestückt sein, je nach geforderter elektrischer Leistung und Spannung des Zellcontainers. Im gezeigten Ausführungsbeispiel ist der Zellhalter vollständig bestückt, so dass der Zellcontainer vorzugsweise fünfzehn Zellen aufweist, die eine Parallelschaltung aus drei Zellreihen von je fünf in Reihe geschalteten Zellen bilden und eine Containernennspannung von 18 Volt ausbilden. Zwei in Reihe geschaltete Zellcontainer ergeben - je nach Ladezustand - eine Akkupackspannung von 26 bis 42 Volt. Es kann vorteilhaft sein, einen Zellhalter derart auszubilden, dass der gebildete Zellcontainer eine Gesamtzahl an Zellen 3a, 3b, 3c von etwa neun bis neunzehn Zellen, insbesondere fünfzehn Zellen 3a, 3b, 3c aufnehmen kann.

In einer bevorzugten Zellanordnung beträgt die Anzahl der Nachbarzellen 3b zumindest mehr als ein Drittel der Gesamtzahl der Zellen 3a, 3b, 3c des Zellcontainers. Im gezeigten Ausführungsbeispiel beträgt die Anzahl der Nachbarzellen 3b mehr als die Hälfte der Gesamtzahl der Zellen 3a, 3b, 3c des Zellcontainers, nämlich acht Zellen.

Die Anordnung ist dabei so getroffen, dass die Gruppe der Nachbarzellen 3b zwischen zwei Endreihen 49 aus Abschlusszellen 3c liegt, wobei die Abschlusszellen 3c eine Zellreihe 49 aus vorzugsweise drei Zellen 3c bilden. Bei vollständiger Bestückung des Zellhalters 66 liegen längs der Schmalseiten 35, 36 des Zellhalters 66 je drei Abschlusszellen 3c. Die Nachbarzellen 3b liegen in Gruppen von je zwei Nachbarzellen 3b an den Längsseiten (21, 22) des Zellhalters 66 und zwischen den Abschlusszellen 3c an den Schmalseiten 35, 36 des Zellhalters 66 und der Kernzelle 3a. Die Mittelpunkte 44 der Zellenenden 8, 9 der Nachbarzellen 3b einer Zweiergruppe 45, 49 liegen auf einer Geraden (46, 47), die parallel zur Längsseite 21, 22 oder Schmalseite 35, 36 des Zellhalters 66 verläuft.

Die Zellen 3 eines Zellcontainers 4, 5 sind bezogen auf eine Längsmittelachse 16 des Zellcontainers bzw. des Zellhalters 66 symmetrisch angeordnet, wobei diese symmetrische Anordnung sowohl zur kleinen Halbachse y der Kurve 65 als auch zu deren großer Halbachse x ausgebildet ist. Der Zellhalter 66 selbst weist hingegen bezogen auf die Querachse 55 ohne Berücksichtigung der Stützdome eine entsprechende Symmetrie auf, ist aber bezogen auf die Längsmittelachse 16 unsymmetrisch ausgebildet.

Wie insbesondere den Figuren 9, 10 und 12 zu entnehmen, weisen die Führungsabschnitte 20a der Längsseite 22 Längskanten auf, die als federnde Laschen 50 gestaltet sind. Die federnden Laschen 50 begrenzen einen Aufnahmeraum 51, der zur Längsseite 22 hin durch die Lasche 50 weitgehend verschlossen ist. Die Längskante der Lasche 50 hat zum Grundkörper des Zellhalters 66 einen Abstand 1, durch den der Verdrahtung dienende Leitungen in den Aufnahmeraum 51 eingeklipst werden können.

Der ausgebildete Führungsabschnitt 20a ist von einer zylindrischen Halbschale 57 gebildet, die über einen oder mehrere Stege 58 am Zellhalter 66 gehalten ist. Die Zylinderlängsachse des Führungsabschnitts 20a liegt etwa lotrecht zur Ebene des Zellhalters 66 selbst. Die Stege 58 haben eine kürzere Längserstreckung als die Halbschale 57, wodurch zwischen der Halbschale 57 und dem Umfangsrand 12 des Zellhalters 66 ein Führungskanal 59 ausgebildet ist, der zur Verlegung einer elektrischen Verdrahtung genutzt werden kann.

Zwischen den Aufnahmetöpfen 11b der Zweiergruppe 45 auf der Längsseite 22 ist ein der Längsseite 22 benachbarter weiterer Aufnahmeraum 52 ausgebildet, der durch elastische Zungen 53 verschlossen ist. Ferner ist eine Aufnahmetasche 54 für einen Sensor, z. B. einen Temperatursensor, vorgesehen um den Zustand der Zellen 3 im Zellcontainer 4, 5 zu überwachen. Der Aufnahmeraum 54 liegt zwischen zwei Zellen, insbesondere zwischen zwei Nachbarzellen 3b, und liegt an beiden Zellen wärmeübertragend an, ggf. mittels einer Wärmeleitpaste oder dgl..

Im Ausführungsbeispiel nach den Figuren 9 bis 12 liegen die Stützdome 28, 29 zwischen den Zellen 3a und 3b des Zellcontainers, wobei nach Fig. 12 die Stützdome benachbart zum zentralen Aufnahmetopf 11a liegen. Die Stützdome 28 und 29 liegen auf der Längsmittelachse 16 des Zellhalters 66.

Wie die Figuren 9, 10 und 12 zeigen, ist zwischen dem zentralen Aufnahmetopf 11a und den benachbart liegenden Aufnahmetöpfen 11b im Boden 10 des Zellhalters mindestens eine Öffnung 56 ausgebildet. Im Ausführungsbeispiel liegen - symmetrisch zur Längsmittelachse 16 und zur Querachse 55 angeordnet - mehrere Öffnungen 56, die zur Führung einer Verdrahtung dienen können.

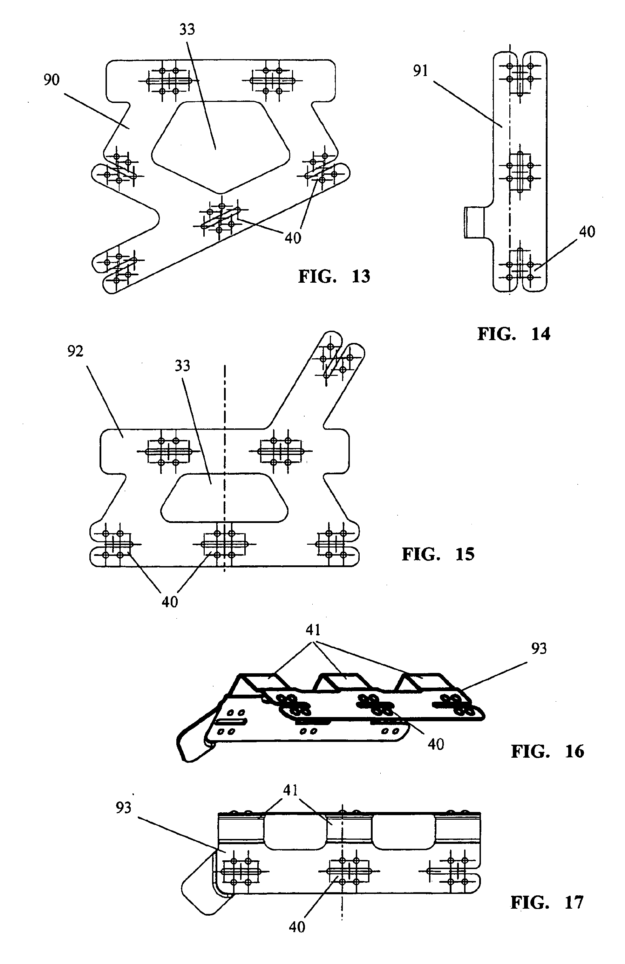

Ferner weist die den Zellenenden abgewandte Flachseite eines Zellhalters 66 Zentrierköpfe 26 auf (Fig. 9), die in entsprechende Öffnungen 33 in Zellverbindern 90, 92 eingreifen, die in den Einlageräumen 25 lagegenau gehalten sind. Derartige Zellverbinder sind in den Fig. 13 und 15 dargestellt.

Zur elektrischen Kontaktierung der Zellen eines Zellhalters 66 werden die Zellverbinder 90, 91, 92, 93 nach den Fig. 13 bis 17 eingesetzt, die im Grundaufbau denen nach Fig. 6 bis 8 entsprechen; gleiche Teile sind mit gleichen Bezugszeichen versehen.

Die Zellverbinder 90 und 92 weisen Öffnungen 33 zum Eingriff der Zentrierköpfe 26 auf und sind zur Verbindung von sechs Zellen gleichzeitig ausgelegt. Die Zellverbinder 91 und 93 (Fig. 14 und 16, 17) dienen der elektrischen Verbindung von drei Zellenenden eines Zellhalters. Der Zellverbinder 93 ist doppelt ausgeführt und dient der Verbindung eines ersten Zellcontainers mit einem zweiten Zellcontainer in einem gemeinsamen Akkupackgehäuse, wie in Figur 1 schematisch wiedergegeben ist.

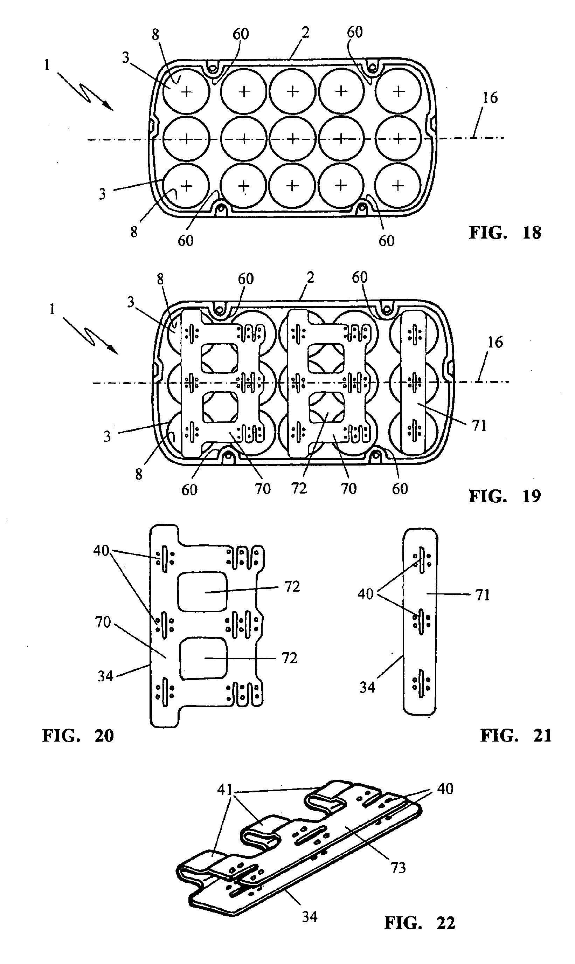

Im Ausführungsbeispiel nach den Figuren 18 bis 22 ist eine weitere mögliche Zellanordnung (Fig. 18) dargestellt, wie sie mit erfindungsgemäßen Zellhaltern gestaltet werden kann. Es sind - wie Fig. 19 zeigt - 15 Zellen derart angeordnet und miteinander verbunden, dass sie in das Gehäuse 2 eines Akkupacks 1 entsprechend der Darstellung in Fig. 1 einsetzbar sind. Dabei können mit entsprechend gestalteten Zellverbindern 70 (Fig. 20) jeweils sechs Zellen 3 an einem Zellenende 8 miteinander verbunden werden, wobei die letzten drei Zellen des Zellverbandes über einen laschenartigen Zellverbinder 71 (Fig. 21) miteinander zu verbinden sind. Der Zellverbinder 70 kann dabei mehrere Öffnungen 72 zum Eingriff von Zentrierköpfen aufweisen. Der Zellverbinder 73 (Fig. 22) wird zur Verbindung der beiden Zellcontainer 4, 5 genutzt, wie am Beispiel des Zellverbinders 32 in Fig. 1 gezeigt ist.

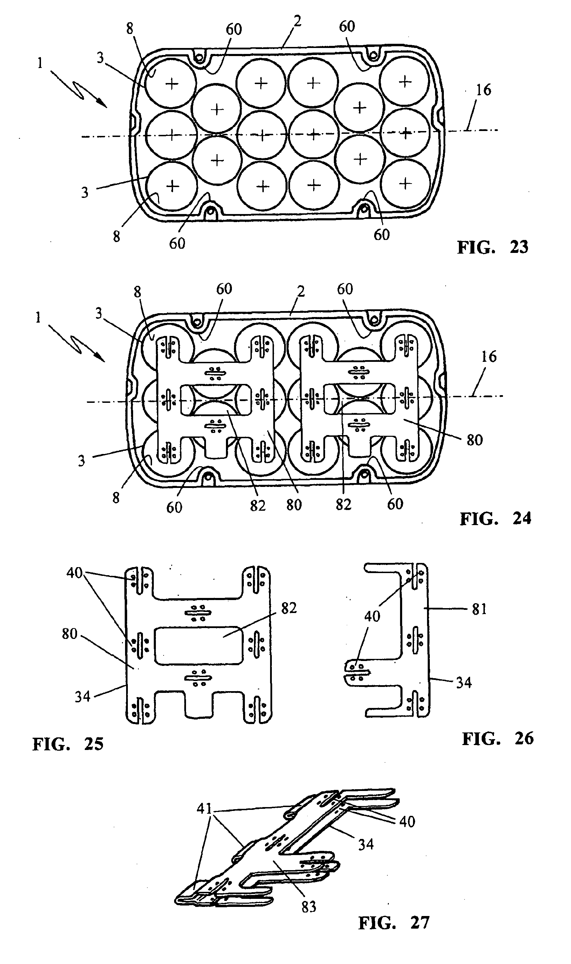

Im Ausführungsbeispiel nach den Figuren 23 bis 27 ist eine schematische Zellanordnung von 16 Zellen gezeigt. Die Zellanordnung der einzelnen Zellen 3 in Fig. 23 erfolgt in Gruppen 3-2-3 zu je acht Zellen, wobei zwischen jeweils zwei Reihen von drei Zellen nur zwei Zellen liegen. Die Zellen werden - wie Fig. 24 zeigt - über einen Zellverbinder 80 (Fig. 25) mit einer Öffnung 82 in Gruppen von je acht Zellen 3 miteinander verbunden werden. Auf der Gegenseite des Zellcontainers werden - zur entsprechenden Kontaktierung - entsprechend gestaltete Zellverbinder 81 (Fig. 26) eingesetzt, die vier Zellen miteinander kontaktieren.

Der Zellverbinder 83 (Fig. 27) dient der elektrischen Verbindung von übereinander liegenden Zellcontainern 4, 5, wie es in Fig. 1 am Beispiel des Zellverbinders 32 dargestellt ist. In einem Akkupack 1 kann ein Zellcontainer oder auch mehr als zwei Zellcontainer zusammengeschaltet eingesetzt werden.

In besonderer Ausgestaltung der Erfindung sind die Zellhalter eines Zellcontainers identisch ausgebildet, also Gleichteile. Dabei können die Zellhalter über Stützdome gegeneinander abgestützt sein, wobei die Stützdome insbesondere mechanisch miteinander verbunden werden, zweckmäßig miteinander verschraubt sind. Auf diese Weise wird bereits vor dem Einsetzen und Verschweißen der Zellverbinder eine mechanisch stabile Struktur aus Zellhaltern und den Zellen der Zellanordnung geschaffen, so dass im laufenden Fertigungsprozess ein leicht weiter zu bearbeitendes Modul geschaffen ist.

## Patentansprüche

1. Akkupack für ein Elektrowerkzeug, insbesondere für ein handgeführtes Arbeitsgerät wie eine Motorkettensäge, eine Heckenschere oder dgl., bestehend aus mindestens einer Zellanordnung mit einer Vielzahl einzelner Zellen (3a, 3b, 3c), die zur Bildung eines Zellcontainers (4, 5) mit einer vorgegebenen Gesamtzahl an Zellen (3a, 3b, 3c) aufrecht nebeneinander angeordnet sind, derart, dass ihre Zellenachsen (63) etwa lotrecht zu einer gemeinsamen Bezugsebene (64) liegen, wobei die Zellen (3a, 3b, 3c) an ihren Enden (8, 9) über Zellverbinder (30, 31) elektrisch leitend kontaktiert sind, wobei die Zellanordnung eines Zellcontainers (4, 5) eine Kernzelle (3a) aufweist, die innerhalb einer Gruppe von Nachbarzellen (3b) liegt, und die Schnittpunkte (S) der Zellachsen (63) aller Nachbarzellen (3b) mit der Bezugsebene (64) auf einer geschlossenen Kurve (65) liegen, wobei die Anzahl der Nachbarzellen (3b) mehr als ein Drittel der Gesamtzahl der Zellen (3a, 3b, 3c) des Zellcontainers (4, 5) beträgt, **dadurch gekennzeichnet, dass** die Kurve eine ellipsenförmige Kurve ist (65)₁, und dass die Gruppe der Nachbarzellen (3b) zwischen zwei Endreihen (49) aus Abschlusszellen (3c) liegt₂.
¹ Restmerkmal aus Anspruch 1 -etwa ellipsenförmig -
² Teilmerkmal 1 des ursprünglichen Anspruchs 5

2. Akkupack nach Anspruch 1,
**dadurch gekennzeichnet, dass** die Nachbarzellen (3b) mit unterschiedlichen Abständen (R1, R2) zur zentralen Kernzelle (3a) liegen.₃
³ Beschreibung Satz Seite 18/19

3. Akkupack nach Anspruch 1,
**dadurch gekennzeichnet, dass** die Anzahl der Nachbarzellen (3b) mehr als die Hälfte der Gesamtzahl der Zellen (3a, 3b, 3c) des Zellcontainers (4, 5) beträgt.

4. Akkupack nach einem der Ansprüche 1 bis 3,
**dadurch gekennzeichnet, dass** die Gesamtzahl der Zellen (3a, 3b, 3c) des Zellcontainers (4, 5) neun bis neunzehn Zellen beträgt.

5. Akkupack nach Anspruch 1,
**dadurch gekennzeichnet, dass** die Gesamtzahl der Zellen (3a, 3b, 3c) des Zell-containers (4, 5) 15 Zellen (3a, 3b, 3c) beträgt.

6. Akkupack nach einem der Ansprüche 1 bis 5,
**dadurch gekennzeichnet, dass** die Gruppe der Nachbarzellen (3b) eines Zellcontainers (4, 5) aus acht Zellen (3b) besteht.

7. Akkupack nach einem der Ansprüche 1 bis 6,
**dadurch gekennzeichnet, dass** die Abschlusszellen (3c) eine Zellreihe (49) aus drei Zellen (3c) bilden.

8. Akkupack nach einem der Ansprüche 1 bis 7,
**dadurch gekennzeichnet, dass** die Zellen (3) eines Zellcontainers (4, 5) bezogen auf seine Längsmittelachse (16) symmetrisch angeordnet sind.

9. Akkupack nach einem der Ansprüche 1 bis 8,
**dadurch gekennzeichnet, dass** ein Zellcontainer (4, 5) längs seiner Schmalseiten je drei Abschlusszellen (3c) sowie eine zum Zellcontainer etwa mittige Kernzelle (3a) aufweist, die etwa symmetrisch von vier Zweiergruppen (45, 49) von Nachbarzellen (3b) umgeben ist, wobei je zwei Nachbarzellen (3b) an den Längsseiten (21, 22) des Zellcontainers (4, 5) liegen und weitere zwei Nachbarzellen (3b) zwischen den Abschlusszellen (3c) an den Schmalseiten und der Kernzelle (3a) liegen.

10. Akkupack nach einem der Ansprüche 1 bis 9,
**dadurch gekennzeichnet, dass** die Mittelpunkte (44) der Zellenenden (8, 9) der Nachbarzellen (3b) einer Zweiergruppe (45, 49) auf einer Geraden (46, 47) liegen, die parallel zur Längsseite (21, 22) oder Schmalseite (35, 36) des Zellcontainers (4, 5) liegt.

## Claims

1. Battery pack for an electric tool, in particular a hand-guided working implement such as a motorised chain saw, a hedge cutter or the like, comprising at least one cell assembly of a plurality of individual cells (3a, 3b, 3c) which are arranged adjacent to one another in an upright position to form a cell container (4, 5) with a predetermined total number of cells (3a, 3b, 3c) in such a way that their cell axes (63) are approximately perpendicular to a common reference plane (64), the cells (3a, 3b, 3c) being contacted in an electrically conducting manner at their ends (8, 9) via cell connectors (30, 31), wherein the cell assembly of a cell container (4, 5) comprises a core cell (3a) which lies within a group of adjacent cells (3b), and the points of intersection (S) of the cell axes (63) of all adjacent cells (3b) lie with the reference plane (64) on a closed curve (65), the number of adjacent cells (3b) being more than a third of the total number of cells (3a, 3b, 3c) of the cell container (4, 5), **characterised in that** the curve is an elliptical curve (65) and **in that** the group of adjacent cells (3b) lies between two end rows (49) of end cells (3c).

2. Battery pack according to claim 1,
**characterised in that** the adjacent cells (3b) are arranged at different distances (R1, R2) from the central core cell (3a)³.

3. Battery pack according to claim 1
**characterised in that** the number of adjacent cells (3b) is more than half of the total number of cells (3a, 3b, 3c) of the cell container (4, 5).

4. Battery pack according to any of claims 1 to 3,
**characterised in that** the total number of cells (3a, 3b, 3c) of the cell container (4, 5) is nine to nineteen cells.

5. Battery pack according to claim 1,
**characterised in that** the total number of cells (3a, 3b, 3c) of the cell container (4, 5) is 15 cells (3a, 3b, 3c).

6. Battery pack according to any of claims 1 to 5,
**characterised in that** the group of adjacent cells (3b) of a cell container (4, 5) consists of eight cells (3b).

7. Battery pack according to any of claims 1 to 6,
**characterised in that** the end cells (3c) form a cell row (49) of three cells (3c).

8. Battery pack according to any of claims 1 to 7,
**characterised in that** the cells (3) of a cell container (4, 5) are arranged symmetrically with reference to its longitudinal central axis (16).

9. Battery pack according to any of claims 1 to 8,
**characterised in that** a cell container (4, 5) comprises along each of its narrow sides three end cells (3c) and a core cell (3a) which is approximately central with reference to the cell container and which is surrounded approximately symmetrically by four twin groups (45, 49) of adjacent cells (3b), wherein two adjacent cells (3b) each lie at the long sides (21, 22) of the cell container (4, 5) and two further adjacent cells (3b) lie between the end cells (3c) at the narrow sides and the core cell (3a).

10. Battery pack according to any of claims 1 to 9,
**characterised in that** the centres (44) of the cell ends (8, 9) of the adjacent cells (3b) of a twin group (45, 49) lie on a straight line (46, 47) which extends parallel to the long side (21, 22) or the narrow side (35, 36) of the cell container (4, 5).

## Revendications

1. Batterie pour un outil électrique, en particulier pour un appareil tenu à la main tel qu'une tronçonneuse, un taille-haie, etc., composée d'au moins un dispositif à éléments avec une multiplicité d'éléments individuels (3a, 3b, 3c) qui, pour former un récipient à éléments (4, 5) avec un nombre total prédéfini d'éléments (3a, 3b, 3c), sont disposés debout les uns à côté des autres de telle sorte que leurs axes (63) soient à peu près perpendiculaires à un plan de référence commun (64), étant précisé que les éléments (3a, 3b, 3c) sont en contact électriquement conducteur au niveau de leurs extrémités (8, 9), par l'intermédiaire de raccords d'éléments (30, 31), étant précisé que le dispositif à éléments d'un récipient à éléments (4, 5) comporte un élément central (3a) qui se trouve à l'intérieur d'un groupe d'éléments voisins (3b), et que les intersections (S) des axes (63) de tous les éléments voisins (3b) avec le plan de référence (64) se trouvent sur une courbe fermée (65), étant précisé que le nombre d'éléments voisins (3b) représente plus d'un tiers du nombre total d'éléments (3a, 3b, 3c) du récipient à éléments (4, 5),
**caractérisée en ce que** la courbe est une courbe ellipsoïdale (65) et **en ce que** le groupe d'éléments voisins (3b) se trouve entre deux rangées d'extrémité (49) d'éléments terminaux (3c).

2. Batterie selon la revendication 1,
**caractérisée en ce que** les éléments voisins (3b) se trouvent à des distances (R1, R2) différentes de l'élément central (3a).

3. Batterie selon la revendication 1,
**caractérisée en ce que** le nombre d'éléments voisins (3b) représente plus de la moitié du nombre total d'éléments (3a, 3b, 3c) du récipient à éléments (4, 5).

4. Batterie selon l'une des revendications 1 à 3,
**caractérisée en ce que** le nombre total d'éléments (3a, 3b, 3c) du récipient à éléments (4, 5) est de neuf à dix-neuf éléments.

5. Batterie selon la revendication 1,
**caractérisée en ce que** le nombre total d'éléments (3a, 3b, 3c) du récipient à éléments (4, 5) est de 15 éléments (3a, 3b, 3c).

6. Batterie selon l'une des revendications 1 à 5,
**caractérisée en ce que** le groupe d'éléments voisins (3b) d'un récipient à éléments (4, 5) se compose de huit éléments (3b).

7. Batterie selon l'une des revendications 1 à 6,
**caractérisée en ce que** les éléments terminaux (3c) forment une rangée d'éléments (49) composée de trois éléments (3c).

8. Batterie selon l'une des revendications 1 à 7,
**caractérisée en ce que** les éléments (3) d'un récipient à éléments (4, 5) sont disposés symétriquement par rapport à son axe longitudinal médian (16).

9. Batterie selon l'une des revendications 1 à 8,
**caractérisée en ce qu'**un récipient à éléments (4, 5) présente le long de chacun de ses petits côtés trois éléments terminaux (3c), ainsi qu'un élément central (3a) qui est situé à peu près au milieu par rapport au récipient et qui est entouré à peu près symétriquement par quatre groupes doubles (45, 49) d'éléments voisins (3b), étant précisé qu'il y a deux éléments voisins (3b) sur chaque grand côté (21, 22) du récipient à éléments (4, 5) et qu'il y a deux autres éléments voisins (3b) entre les éléments terminaux (3c) des petits côtés, et l'élément central (3a).

10. Batterie selon l'une des revendications 1 à 9,
**caractérisée en ce que** les centres (44) des extrémités (8, 9) des éléments voisins (3b) d'un groupe double (45, 49) sont situés sur une droite (46,47) qui est parallèle au grand côté (21, 22) ou au petit côté (35, 36) du récipient à éléments (4, 5).
